# EUROPÄISCHE PATENTSCHRIFT

(11) **EP 3 321 570 B1**
(45) Veröffentlichungstag und Bekanntmachung des Hinweises auf die Patenterteilung: **22.12.2021**
(21) Anmeldenummer: 17190802.3
(22) Anmeldetag: 13.09.2017
(51) Int. Cl.: F21S 41/39, F21S 41/19

(54) **VERFAHREN ZUR ANORDNUNG EINES SCHALTUNGSTRÄGERS UND BELEUCHTUNGSEINRICHTUNG FÜR EIN KRAFTFAHRZEUG MIT EINEM NACH DIESEM VERFAHREN ANGEORDNETEN SCHALTUNGSTRÄGER**
METHOD FOR ARRANGING A CIRCUIT CARRIER AND LIGHTING DEVICE FOR A MOTOR VEHICLE WITH A CIRCUIT CARRIER ARRANGED ACCORDING TO THIS METHOD
PROCÉDÉ D'AGENCEMENT D'UN SUPPORT DE CIRCUIT ET DISPOSITIF D'ÉCLAIRAGE DE VÉHICULE AUTOMOBILE POURVU DE SUPPORT DE CIRCUIT SELON LE PROCÉDÉ

(30) Priorität: 18.10.2016 DE 102016119792
(43) Veröffentlichungstag der Anmeldung: 16.05.2018
(73) Patentinhaber: Automotive Lighting Reutlingen GmbH, 72762 Reutlingen (DE)
(72) Erfinder: Mattner, Matthias, 72108 Rottenburg am Neckar (DE); Barton, Silke, 72800 Eningen (DE); Breitenbach, Uwe, 72654 Neckartenzlingen (DE); Connerth, Rolf, 72827 Wannweil (DE); Stang, Andreas, 72762 Reutlingen (DE); Müller, Marcus, 72800 Eningen (DE); Wagner, J. Tobias F., 72072 Tübingen (DE)
(74) Vertreter: DREISS Patentanwälte PartG mbB

(56) Entgegenhaltungen:
- WO-A1-2014/190368
- AT-A1- 513 362
- DE-A1-102012 103 439
- DE-A1-102014 101 787
- DE-A1-102014 210 654
- FR-A1- 3 012 575

## Beschreibung

Die Erfindung betrifft ein Verfahren zur Anordnung eines Schaltungsträgers nach dem Oberbegriff des Anspruchs 1 sowie eine Beleuchtungseinrichtung für ein Kraftfahrzeug, mit einem nach dem erfindungsgemäßen Verfahren angeordneten Schaltungsträger. Ein solches Verfahren und eine solche Vorrichtung sind jeweils aus der AT 513362 A1 bekannt. Aus der DE 10 2014 101 787 A1 ist ein Verfahren zum Aufbau eines LED-Lichtmoduls bekannt, bei dem eine Höhenposition einer LED auf einer Leiterplatte bestimmt wird und eine Aufnahmevertiefung in einem Aufnahmekörper in Abhängigkeit von der Höhenposition hergestellt wird.

Zur Erzeugung vorgegebener lichttechnischer Funktionen von Beleuchtungseinrichtungen für Kraftfahrzeuge wie beispielsweise Scheinwerfern oder Heckleuchten ist eine hochgenaue Positionierung und Ausrichtung der lichtemittierenden Bereiche von verwendeten Halbleiterlichtquellen (LEDs) relativ zu dem restlichen optischen System von großer Bedeutung. Aus der WO 2014/1535761 ist ein Verfahren zur kameragesteuerten hochgenauen Platzierung von Halbleiterlichtquellen auf einem Schaltungsträger bekannt. Der lichtemittierende Bereich der LED wird erfasst und anhand von dessen Position die LED auf dem Schaltungsträger platziert und anschließend elektrisch kontaktiert. In einem nachfolgenden Montageschritt wird dann der Schaltungsträger mit der oder den darauf montierten LEDs in dem optischen System einer Beleuchtungseinrichtung angeordnet und dort befestigt. Hierzu weist der Schaltungsträger Referenzpunkte oder Markierungen auf, die relativ zu mindestens einem entsprechenden Referenzbereich des optischen Systems angeordnet werden.

Ferner ist aus der nachveröffentlichten deutschen Patentanmeldung 10 2016 108 260 ein Verfahren zur Anordnung eines Schaltungsträgers umfassend zumindest eine Halbleiterlichtquelle in einer bestimmten Lage relativ zu einem optischen System bekannt, bei dem die folgenden Schritte ausgeführt werden:
- Vorgeben einer Soll-Lage eines lichtemittierenden Bereichs der Halbleiterlichtquelle in Bezug auf zumindest zwei Bohrungen in dem Schaltungsträger,
- Festlegen der mindestens einer Halbleiterlichtquelle und der Bohrungen in Abhängigkeit von der Soll-Lage zueinander,
- Einführen eines jeweiligen, einem Anschlagbereich des optischen Systems zugeordneten Anschlagelements in die Bohrungen, und
- Durchführen einer Relativbewegung des Schaltungsträgers und des optischen Systems relativ zueinander derart, dass die Anschlagelemente an dem jeweiligen Anschlagbereich anliegen.

Bei diesem aus der nachveröffentlichten Druckschrift bekannten Verfahren findet bspw. das Fertigungs- und/oder Beschichtungsverfahren des optischen Systems, das bspw. als ein Reflektor ausgebildet ist, keine Berücksichtigung. Insbesondere wird ein als Reflektor ausgebildetes optisches System nach seiner Herstellung aus Kunststoff mittels eines Spritzgussverfahrens hergestellt. Dann wird der Reflektor lackiert, und als letzter Schritt wird die optische Fläche metallisiert, um die gewünschte hochwertige Reflexionsfläche zu erhalten. Zum Lackieren des Reflektors wird vorzugsweise ein im ausgehärteten Zustand reflektierender Lack verwendet. Die Beschichtung mit dem Lack geschieht in der Regel mittels eines Tauch- oder Sprühverfahrens, wobei auch andere Bereiche des optischen Systems außerhalb des Wirkabschnitts mit Lack beschichtet werden. Dies hat zumindest dann negative Auswirkungen auf die Genauigkeit der Positionierung der mindestens einen Halbleiterlichtquelle relativ zu dem optischen System, wenn Lack auch auf eine Anschlagfläche des optischen Systems, auf der der Schaltungsträger mit der mindestens einen LED zur Auflage gelangt, und/oder auf die Anschlagbereiche gelangt, an denen die Anschlagelemente zur Anlage gelangen.

Ausgehend von dem beschriebenen Stand der Technik liegt der vorliegenden Erfindung die Aufgabe zu Grunde, die Genauigkeit bei der Positionierung und der Ausrichtung von lichtemittierenden Flächen von Halbleiterlichtquellen relativ zu einem optischen System einer Beleuchtungseinrichtung zu verbessern. Insbesondere soll mit der Erfindung eine Schnittstelle zwischen den Halbleiterlichtquellen und dem optischen System definiert werden, die eine hochgenaue Positionierung der Halbleiterlichtquellen relativ zu dem optischen System unabhängig von dem Fertigungs- und/oder Beschichtungsverfahren des optischen Systems ermöglicht und gleichzeitig möglichst wenig Bauraum benötigt.

Die der Erfindung zugrunde liegende Aufgabe wird durch ein Verfahren nach dem Anspruch 1 gelöst. Es wird insbesondere vorgeschlagen, dass zur Anordnung eines Schaltungsträgers umfassend mindestens eine Halbleiterlichtquelle in einer bestimmten Lage relativ zu einem optischen System einer Beleuchtungseinrichtung eines Kraftfahrzeugs folgende Schritte ausgeführt werden:
- eine Soll-Lage eines lichtemittierenden Bereichs der mindestens einen Halbleiterlichtquelle wird in Bezug auf zumindest zwei Bohrungen in dem Schaltungsträger vorgegeben,
- die mindestens eine Halbleiterlichtquelle und die Bohrungen werden in Abhängigkeit von der Soll-Lage relativ zueinander festgelegt,
- in die Bohrungen wird jeweils ein Anschlagelement eingeführt und darin festgelegt, wobei jedes der Anschlagelemente einem Anschlagbereich des optischen Systems zugeordnetes ist,
- der Schaltungsträger wird auf eine Anschlagfläche mit mindestens zwei davon abstehenden Anschlagrippen aufgelegt, so dass definierte Auflagebereiche des Schaltungsträgers auf den Anschlagrippen liegen, und
- eine Relativbewegung des Schaltungsträgers und des optischen Systems relativ zueinander wird derart ausgeführt, dass die Anschlagelemente an dem jeweiligen Anschlagbereich anliegen.

Das Verfahren zeichnet sich durch die kennzeichnenden Merkmale des Anspruchs 1 aus

Vorteilhafterweise sind die Anschlagelemente und die Anschlagbereiche derart ausgebildet und auf dem Schaltungsträger angeordnet, dass sie in ihrer Funktion nicht durch auf dem Schaltungsträger angeordnete Leiterbahnen und Bauteile beeinträchtigt sind, und umgekehrt die auf dem Schaltungsträger angeordneten Leiterbahnen und Bauteile in ihrer Funktion nicht durch die Anschlagelemente und die Anschlagbereiche beeinträchtigt sind.

Die damit einhergehende Relativbewegung zwischen dem lichtemittierenden Bereich der Halbleiterlichtquelle und einem optischen Wirkbereich bis zum Anliegen der Anschlagelemente an dem jeweiligen Anschlagbereich ermöglicht die exakte Positionierung des lichtemittierenden Bereichs zu dem mit dem lichtemittierenden Bereich zusammenwirkenden optischen Wirkbereich des optischen Systems. Die Relativbewegung kann neben einer Verschiebung in einer gedachten Ebene parallel zu der Anschlagfläche bzw. den Anschlagrippen auch eine Verdrehung um eine zu der Ebene senkrecht stehenden Achse umfassen. Die Anschlagfläche erstreckt sich vorzugsweise in einer Ebene parallel zu einer Lichtaustrittsrichtung der Beleuchtungseinrichtung bzw. zu einer Fahrtrichtung des mit der Beleuchtungseinrichtung versehenen Kraftfahrzeugs.

Ein besonderer Vorteil besteht darin, dass bei der Anordnung des Schaltungsträgers und des optischen Systems zueinander keine optische Inspektion notwendig ist. Vielmehr kann durch die vorangehende Positionierung und Festlegung der Anschlagelemente und der Halbleiterlichtquelle zueinander die exakte Einbauposition bereits festgelegt werden. Mithin können Fertigungsschritte voneinander entkoppelt und eingespart werden.

Ein weiterer Vorteil der Erfindung besteht darin, dass aufgrund der auf der Anschlagfläche ausgebildeten Anschlagrippen eine definierte Lage des Schaltungsträgers mit der mindestens einen Halbleiterlichtquelle erzeugt wird. Die Anschlagrippen haben dabei aufgrund ihrer Form den Vorteil, dass ein nach einem beliebigen Verfahren aufgebrachter Lack größtenteils von der Oberfläche der Rippen abfließt und wenn überhaupt, lediglich eine ganz dünne Lackschicht mit einer minimalen Schichtdicke auf der Oberfläche der Anschlagrippen verbleibt, die praktisch keine negativen Auswirkungen auf die Genauigkeit der Positionierung der Halbleiterlichtquellen relativ zu dem optischen System hat. Die Viskosität oder Fließfähigkeit des aufzutragenden Lacks ist in der Regel so gewählt, dass ein Abfließen des aufgetragenen Lacks von dem Wirkabschnitt zu einer gewünschten Schichtdicke der Beschichtung auf dem Wirkabschnitt führt. Auf der Anschlagfläche selbst kann sich im Stand der Technik der Lack jedoch ansammeln und zu einer Lackschicht führen, welche die Genauigkeit der Positionierung der Halbleiterlichtquelle relativ zu dem optischen System beeinträchtigt. Von den auf der Anschlagfläche ausgebildeten Anschlagrippen fließt der Lack jedoch wieder besonders gut ab, so dass eine Beeinträchtigung der Positionierungsgenauigkeit wirksam und effizient vermieden wird.

Die Anschlagfläche mit den mindestens zwei davon abstehenden Anschlagrippen wird vorzugsweise einteilig mit dem optischen System und mit dem gleichen Werkzeug, mit dem auch das optische System hergestellt wird, hergestellt. In einer vorteilhaften Ausführungsform wird der Schaltungsträger in der bestimmten Lage relativ zu dem optischen System festgelegt, vorzugsweise mittels einer Schraube. Somit kann unter geringem Aufwand die durch die Relativbewegung erreichte Lage fixiert werden, womit auch eine exakte Positionierung des lichtemittierenden Bereichs zu dem optischen System festgelegt wird.

In einer vorteilhaften Ausführungsform wird eine Ist-Position des lichtemittierenden Bereichs der Halbleiterlichtquelle relativ zu dem Schaltungsträger ermittelt, wobei Soll-Positionen für die Bohrungen in Abhängigkeit von der Ist-Position ermittelt werden, und die Bohrungen an der jeweiligen Soll-Position in den Schaltungsträger eingebracht werden. So kann vorteilhaft eine auf dem Schaltungsträger vorverbaute Halbleiterlichtquelle mittels der Ausführung der Bohrungen nachgehend exakt relativ zu dem optischen System positioniert werden.

In einer vorteilhaften alternativen Ausführungsform werden Ist-Positionen der Bohrungen in Bezug zu dem Schaltungsträger ermittelt, wobei eine Soll-Position für die zumindest eine Halbleiterlichtquelle in Abhängigkeit von den Ist-Positionen ermittelt wird, und die Halbleiterlichtquelle an der Soll-Position auf dem Schaltungsträger befestigt wird. Der Vorteil dieser Ausführungsform besteht darin, dass eine Bestückung des Schaltungsträgers in Abhängigkeit von zuvor ausgeführten Bohrungen die exakte Positionierung des lichtemittierenden Bereichs zu dem optischen System bestimmt.

In einer vorteilhaften Ausführungsform umfasst das optische System einen optisch mit der Halbleiterlichtquelle zusammenwirkenden optischen Wirkabschnitt, welcher integraler Bestandteil des optischen Systems ist. Der Wirkabschnitt wird durch ein Werkzeugteil umfassendes Werkzeug hergestellt, durch das auch die Anschlagbereiche und/oder die Anschlagfläche bzw. die Anschlagrippen auf der Anschlagfläche hergestellt werden. Das optische System kann bspw. als ein Reflektor, im Falle von Halbleiterlichtquellen vorzugsweise als ein Halbschalenreflektor, ausgebildet sein. Der optische Wirkabschnitt ist vorzugsweise eine Reflektorfläche.

In einer weiteren vorteilhaften Ausführungsform wird die Soll-Lage des lichtemittierenden Bereichs der mindestens einen Halbleiterlichtquelle in Bezug auf die Bohrungen in Abhängigkeit von einer weiteren Soll-Lage des mindestens einen lichtemittierenden Bereichs in Bezug auf die Anschlagbereiche des optischen Systems vorgegeben. Durch diese weitere Soll-Lage ist ein Bezug zwischen dem Schaltungsträger, zu dem der lichtemittierende Bereich festgelegt wird, und dem optischen System hergestellt.

Vorteilhafterweise werden die Anschlagrippen jeweils als ein Zylinderabschnitt in Form eines entlang seiner Längsachse beschnittenen Zylinders hergestellt. Um die negativen Auswirkungen einer Lackschicht auf der Anschlagfläche auf die Genauigkeit einer Positionierung der Halbleiterlichtquelle relativ zu dem optischen System weiter zu reduzieren, wird vorgeschlagen, dass die Anschlagrippen derart hergestellt werden, dass deren Radius mindestens das 10-fache der auf einem Wirkabschnitt des optischen Systems maximal zu erwartenden Lackdicke ist. Mit diesen Abmessungen ist ein besonders gutes Abfließen des aufgetragenen Lacks von der Oberfläche der Anschlagrippen ermöglicht, auf denen dann später der Schaltungsträger mit seinen definierten Auflagebereichen aufliegt. Besonders bevorzugt ist es zudem, wenn die Anschlagrippen derart hergestellt werden, dass deren Radius höchstens das 75-fache der auf einem Wirkabschnitt des optischen Systems maximal zu erwartenden Lackdicke ist.

Gemäß einer vorteilhaften Weiterbildung der Erfindung wird vorgeschlagen, dass die Anschlagbereiche auf einer in einer Lichtaustrittsrichtung der Beleuchtungseinrichtung gerichteten Stirnfläche der Anschlagfläche ausgebildet werden. Vorteilhafterweise umfassen die Anschlagbereiche einerseits zwei entgegen einer Lichtaustrittsrichtung der Beleuchtungseinrichtung zusammenlaufende Prismaflächen und andererseits eine dazu beabstandete parallel zu einer Erstreckungsebene einer in der Lichtaustrittsrichtung gerichteten Stirnfläche der Anschlagfläche versetzt zu den Prismaflächen angeordnete ebene Fläche. Die negativen Auswirkungen der Lackbeschichtung auf die Positionierung der LEDs relativ zu dem optischen System kann dadurch noch weiter verringert werden, wenn in einer Kerbe, in der die beiden Prismaflächen zusammentreffen, ein Freischnitt ausgebildet wird.

Um eine weitere Verbesserung der Genauigkeit der Positionierung der mindestens einen Halbleiterlichtquelle bezüglich des optischen Systems zu realisieren, wird vorgeschlagen, dass die definierten Auflagebereiche des Schaltungsträgers, auf dem die mindestens eine Halbleiterlichtquelle befestigt und elektrisch kontaktiert ist, die auf den Anschlagrippen zur Auflage gelangen, frei von Lötstopplack ausgebildet werden. Besonders bevorzugt erfolgt die Auflage der Anschlagrippen der Anschlagfläche auf dem Schaltungsträger direkt auf Kupfer, chemischem Zinn, chemischem Nickel-Gold (ENIG), chemischem Nickel-Palladium-Gold (ENEPIG) und/oder chemischem Silber oder anderen geeigneten metallischen Beschichtungen. Dadurch wird die Toleranz der Dicke des Lötstopplacks aus der Toleranzkette eliminiert.

Gemäß einer anderen vorteilhaften Weiterbildung der Erfindung wird vorgeschlagen, dass die Anschlagelemente als Stifte mit einem Kopf und einem Schaft ausgeführt werden, wobei auf einer Unterseite des Kopfes um den Schaft herum eine Auflagefläche der Stifte ausgebildet ist, bis zu der die Stifte mit ihrem Schaft in die die Bohrungen eingeführt werden, und wobei der Schaft entlang seiner Längserstreckung zwei Abschnitte mit unterschiedlichen Durchmessern aufweist, einem in der Nähe des Kopfes angeordneten proximalen Abschnitt mit einem Einpressdurchmesser und einem von dem Kopf abgewandten distalen Abschnitt mit einem Zentrierdurchmesser, wobei der Einpressdurchmesser größer als der Zentrierdurchmesser ausgebildet wird. Vorteilhafterweise weisen die die Stifte jeweils in einem Bereich, wo der proximale Abschnitt die Anschlagfläche berührt, einen ringförmigen Freischnitt auf. Vorzugsweise wird eine Längserstreckung des proximalen Abschnitts kleiner gleich einer Dicke des Schaltungsträgers ausgebildet.

Zur Realisierung des erfindungsgemäßen Verfahrens schlägt die Erfindung auch eine entsprechende Vorrichtung vor, welche dadurch gekennzeichnet ist, dass diese umfasst:
- ein Speicherelement zum Abspeichern einer Soll-Lage eines lichtemittierenden Bereichs der Halbleiterlichtquelle in Bezug auf zumindest zwei Bohrungen in dem Schaltungsträger,
- Mittel zum Festlegen der mindestens einen Halbleiterlichtquelle und der Bohrungen in Abhängigkeit von der Soll-Lage zueinander,
- Mittel zum Einführen jeweils eines Anschlagelements in die Bohrungen, wobei jedes Anschlagelement einem Anschlagbereich des optischen Systems zugeordnet ist, und
- Mittel zum Ausführen einer Relativbewegung des Schaltungsträgers und des optischen Systems relativ zueinander derart, dass die Anschlagelemente an dem jeweiligen Anschlagbereich anliegen.

Ferner betrifft die vorliegende Erfindung eine Beleuchtungseinrichtung mit mindestens einer Halbleiterlichtquelle und einem optischen System, bspw. in Form eines Reflektors. Die mindestens eine Halbleiterlichtquelle ist nach dem erfindungsgemäßen Verfahren bezüglich des optischen Systems in der Beleuchtungseinrichtung positioniert.

Weitere Merkmale und Vorteile der vorliegenden Erfindung werden nachfolgend anhand der Figuren näher erläutert. Es zeigen:
- Figuren 1, 3 und 5: jeweils ein schematisches Ablaufdiagramm des erfindungsgemäßen Verfahrens bzw. von Teilen davon;
- Figuren 2 und 4: jeweils eine Vorrichtung zur Durchführung des erfindungsgemäßen Verfahrens;
- Figur 6: eine schematische perspektivische Ansicht auf ein optisches System;
- Figur 7: einen Ausschnitt des optischen Systems mit der Anschlagfläche;
- Figur 8: das optische System in seiner Gesamtheit;
- Figur 9: einen Ausschnitt des optischen Systems mit der Anschlagfläche und eines darauf angeordneten Schaltungsträgers;
- Figur 10: ein Anschlagelement; und
- Figuren 11 bis 12: verschiedene Ausgestaltungen eines Schaltungsträgers.

Zur Erzeugung vorgegebener lichttechnischer Funktionen von Beleuchtungseinrichtungen (z.B. Scheinwerfern oder

Heckleuchten in Kraftfahrzeugen), die Halbleiterlichtquellen verwenden, ist eine hochgenaue Positionierung und Ausrichtung (lagegenaue Justierung) der lichtemittierenden Bereiche der Halbleiterlichtquelle relativ zu dem restlichen optischen System der Beleuchtungseinrichtung von großer Bedeutung. Die Halbleiterlichtquellen sind bspw. als Leuchtdioden (LEDs) ausgebildet. Diese weisen einen lichtemittierenden Bereich auf, der bspw. Konvertermaterial umfasst, das beim Anstrahlen mit blauem Licht von einer LED gelbes Licht aussendet, das sich mit dem blauen Licht der LED zu weißem Licht mischt.

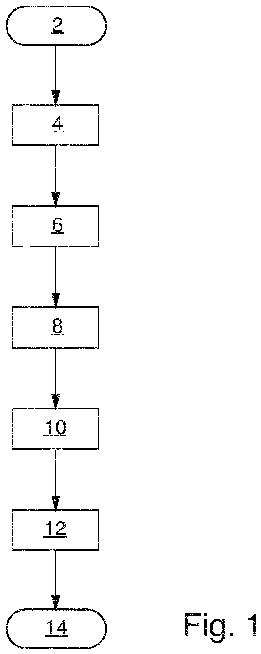

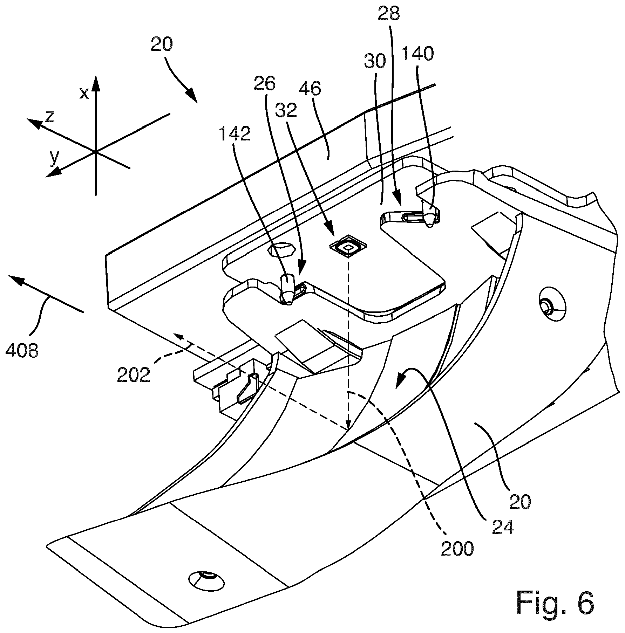

Mit der vorliegenden Erfindung kann ein Schaltungsträger besonders genau relativ zu dem optischen System einer Beleuchtungseinrichtung positioniert werden. Das optische System 20 kann einen Reflektor (vgl. Figur 6) einer Beleuchtungseinrichtung eines Kraftfahrzeugs, bspw. eines Kraftfahrzeugscheinwerfers oder einer Kraftfahrzeugleuchte, umfassen. Alternativ kann das optische System 20 auch eine Vorsatzoptik aus einem massiven transparenten Material zum Bündeln von Lichtstrahlen mittels Brechung beim Eintritt in die Optik und/oder Austritt aus der Optik und/oder mittels interner Totalreflexion an seitlichen Grenzflächen der Optik, oder einen Lichtleiter umfassen. Das optische System 20 weist einen Wirkabschnitt auf, der bspw. als eine Reflexionsfläche 24 eines Reflektors, ein Lichteintrittsbereich einer Vorsatzoptik, oder ein Lichteintrittsbereich eines Lichtleiters ausgebildet sein kann. Eine hochpräzise Anordnung einer Leuchtdiode 32 in Bezug auf das optische System 20 bzw. den Wirkabschnitt 24 ist wichtig, damit das optische System 20 eine vorgegebene Lichtverteilung mit einer vorgegebenen Intensitätsverteilung möglichst genau erzeugen kann. Das erfindungsgemäße Verfahren wird nachfolgend zunächst unter Bezugnahme auf das Ablaufdiagramm der Figur 1 näher erläutert.

Das erfindungsgemäße Verfahren beginnt gemäß dem Ablaufdiagramm aus Figur 1 in einem Funktionsblock 2 und endet in einem Funktionsblock 14. In einem Funktionsblock 4 wird eine Soll-Lage eines lichtemittierenden Bereichs 34 der Halbleiterlichtquelle 32 in Bezug auf zumindest zwei Bohrungen 33, 35 in dem Schaltungsträger 30 vorgegeben. Es werden bevorzugt lediglich zwei Bohrungen zur Positionierung und Festlegung des Schaltungsträgers 30 zu dem optischen System 20 verwendet, um zum einen weitere Toleranzursachen zu vermeiden und zum anderen die möglichst exakte Positionierung zu gewährleisten. Die Verwendung der zwei Bohrungen stellt somit einen vorteilhaften Kompromiss zwischen Aufwand und Positioniergenauigkeit dar.

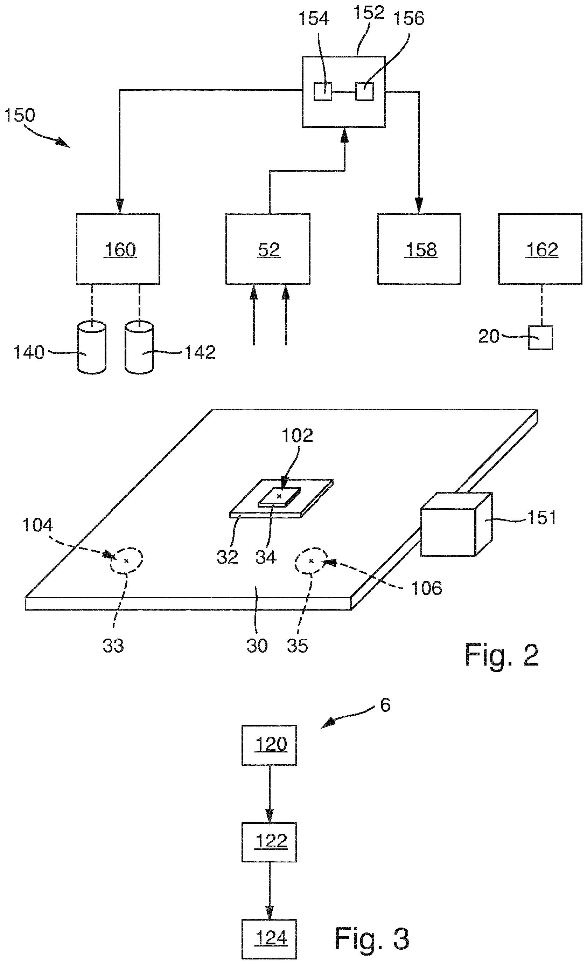

In einem Funktionsblock 6 werden eine Halbleiterlichtquelle 32 und zwei Bohrungen 33 und 35 zueinander auf dem Schaltungsträger 30 festgelegt. Hierzu wird in einer ersten Ausführungsform des Funktionsblocks 6 mindestens ein lichtemittierender Bereich 34 der mindestens einen Halbleiterlichtquelle 32 optisch erfasst (Figur 2). Das optische Erfassen des lichtemittierenden Bereichs 34 kann bspw. mit einer Kamera 52 erfolgen. Die Kamera 52 blickt auf den lichtemittierenden Bereich 34 der Halbleiterlichtquelle 32. Die Halbleiterlichtquelle 32 kann zum Erfassen des lichtemittierenden Bereichs 34 zur Lichterzeugung betrieben werden. Es ist aber auch möglich, den lichtemittierenden Bereich 34 ohne eine entsprechende Lichterzeugung zu erfassen. Bei inaktiver Halbleiterlichtquelle 32 lässt sich der Bereich 34 besser erfassen, wenn dieser mit Licht einer externen Lichtquelle bestrahlt wird, dessen Wellenlänge an die charakteristischen Eigenschaften des lichtemittierenden Bereichs 34 angepasst ist. Wenn der Bereich 34 bspw. ein Konvertermaterial umfasst, welches blaues Licht in gelbes Licht umwandelt, kann ist das externe Licht bspw. ebenfalls blaues Licht mit einem Wellenlängenbereich von etwa 430-490 nm sein.

In einem Funktionsblock 120 des Ablaufdiagramms aus Figur 3 wird die Halbleiterlichtquelle 32 auf dem Schaltungsträger 30 angeordnet. Bei der zuvor auf dem Schaltungsträger 30 angeordneten Halbleiterlichtquelle 32 wird in einem Funktionsblock 122 eine Ist-Position 102 der Halbleiterlichtquelle 32 erfasst. Hierzu wird beispielsweise eine mittels der Kamera 52 ermittelte Aufnahme des Schaltungsträgers 30 auf Kanten des lichtemittierende Bereichs 34 und/oder auf einen Schwerpunkt des lichtemittierenden Bereichs 34 und/oder auf ein Intensitätsmaximum des von dem Bereich 34 abgestrahlten Lichts hin analysiert. In Abhängigkeit von der Lage der zumindest einen Kante und/oder des Schwerpunkts und/oder des Intensitätsmaximums in Bezug zu dem Schaltungsträger 30 wird so die Ist-Position des lichtemittierenden Bereichs 34 bzw. der Halbleiterlichtquelle 32 ermittelt. In Abhängigkeit von der Lage des lichtemittierenden Bereichs 34 im Sinne der Ist-Position 102 werden anschließend die Bohrungen 33 und 35 in einem Funktionsblock 124 in den Schaltungsträger 30 an jeweiligen Soll-Positionen 104 und 106 mittels einer Bohrvorrichtung 158 eingebracht.

Die Soll-Positionen 104 und 106 werden in Abhängigkeit von der Ist-Position 102 ermittelt. Zur Ermittlung der Soll-Positionen 104 und 106 kann beispielsweise ein Soll-Abstand der Ist-Position 102 zu einer Geraden durch die Soll-Positionen 104 und 106 herangezogen werden. Selbstverständlich kann für die Ermittlung der Soll-Positionen 104 und 106 neben der Ist-Position 102 auch eine Orientierung einer Kante des lichtemittierenden Bereichs 34 verwendet werden, um die Gerade durch die Soll-Positionen 104 und 106 im Wesentlichen parallel zu der vorgenannten Kante des lichtemittierenden Bereichs 34 auszurichten.

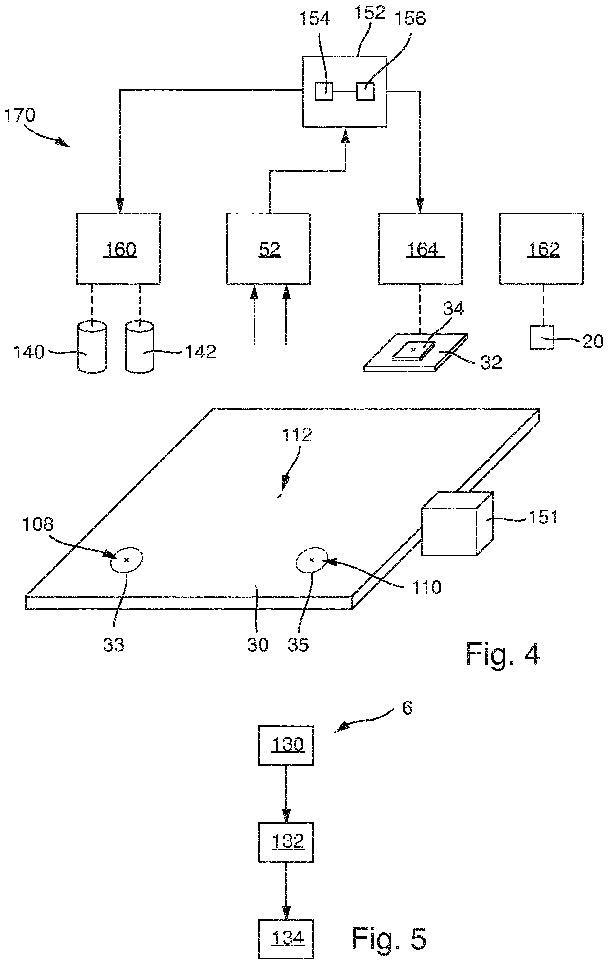

In einer zweiten Ausführungsform des Funktionsblocks 6 wird die Halbleiterlichtquelle 34 in Abhängigkeit von der Position von bereits in den Schaltungsträger 30 eingebrachten Bohrungen 33, 35 auf dem Schaltungsträger 30 positioniert und zu dem Schaltungsträger 30 festgelegt und kontaktiert (Figur 4). Der lichtemittierende Bereich 34 kann hierzu optisch erfasst werden, um die Position des lichtemittierenden Bereichs 34 zu der Position der Bohrungen 33, 35 festzulegen.

Es werden mithin in einem Funktionsblock 130 eines schematischen Ablaufdiagramms der Figur 5 des Funktionsblocks 4 zwei Bohrungen an Ist-Positionen 108 und 110 mittels einer weiteren Bohrvorrichtung in den Schaltungsträger 30 gebohrt. In einem folgenden Funktionsblock 132 werden die Ist-Positionen 108 und 110 mittels eines optischen Inspektionssystems umfassend die Kamera 52 ermittelt. In einem nachfolgenden Funktionsblock 134 wird eine Soll-Position 112 für die Halbleiterlichtquelle 32, insbesondere für den lichtemittierenden Bereich 34, ermittelt und die Halbleiterlichtquelle 32 wird an der Soll-Position 112 positioniert und mit dem Schaltungsträger 30 verbunden. Hierzu wird beispielsweise eine mittels der Kamera 52 aufgenommene Aufnahme der Halbleiterlichtquelle 32 auf Kanten des lichtemittierende Bereich 34 und/oder auf einen Schwerpunkt des lichtemittierenden Bereichs 34 und/oder auf ein Intensitätsmaximum des von dem Bereich 34 ausgesandten Lichts hin analysiert. In Abhängigkeit von der Lage der zumindest einen Kante und/oder des Schwerpunkts und/oder des Intensitätsmaximums in Bezug zu der Soll-Position 112 wird die Halbleiterlichtquelle 32 auf dem Schaltungsträger 30 positioniert und mit dem Schaltungsträger 30 verbunden.

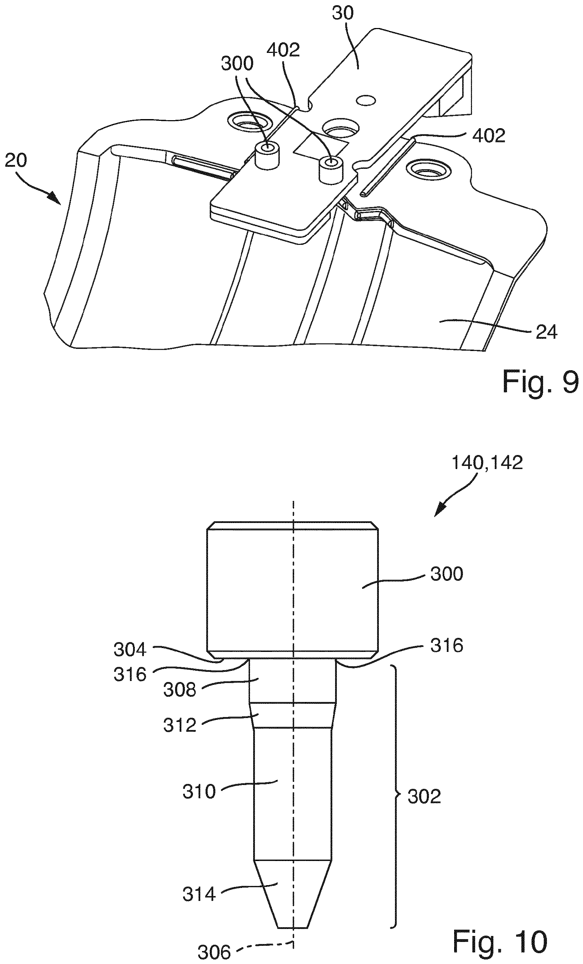

In einem Funktionsblock 8 werden in die Bohrungen 33, 35 ein jeweiliges einem Anschlagbereich 26, 28 zugeordnetes Anschlagelement 140 und 142 eingeführt. Die Anschlagelemente 140 und 142 können als Stifte (Pins) mit im Längsverlauf gleichbleibendem oder verändertem Durchmesser ausgeführt sein (vgl. Figur 10). Gemäß einer bevorzugten Ausführungsform sind die die Anschlagelemente 140, 142 als Stifte mit einem Kopf 300 und einem Schaft 302 ausgeführt. Auf einer Unterseite des Kopfes 300 um den Schaft 302 herum ist eine Auflagefläche 304 der Stifte 140, 142 ausgebildet, bis zu der die Stifte 140, 142 mit ihrem Schaft 302 in die die Bohrungen 33, 35 eingeführt werden. Der Schaft 302 weist entlang seiner Längserstreckung (parallel zur Längsachse 306) zwei Abschnitte 308, 310 mit unterschiedlichen Durchmessern auf, einen in der Nähe des Kopfes 300 angeordneten proximalen Abschnitt 308 mit einem Einpressdurchmesser und einem von dem Kopf 300 abgewandten distalen Abschnitt 310 mit einem Zentrierdurchmesser. Der proximale Abschnitt 308 liegt zwischen dem Kopf 300 und dem distalen Abschnitt 310. Der Einpressdurchmesser ist größer als der Zentrierdurchmesser ausgebildet. Zwischen den beiden Abschnitten 308 und 310 ist ein Übergangsabschnitt 312 mit einer derart schrägen Wandung ausgebildet, dass der Zentrierabschnitt in den Einpressabschnitt übergeht. Am äußersten distalen Ende des Schafts 300 ist eine Spitze 314 ausgebildet.

Die Stifte 140, 142 weisen jeweils in einem Bereich 316, wo der proximale Abschnitt 308 die Anschlagfläche 304 berührt, einen ringförmigen Freischnitt auf. Eine Längserstreckung (parallel zur Längsachse 306) des proximalen Abschnitts 308 ist kleiner gleich einer Dicke des Schaltungsträgers 30 im Bereich der Bohrungen 33, 35 ausgebildet.

In einem Funktionsblock 10 wird eine Relativbewegung des Schaltungsträgers 30 relativ zu dem optischen System 20 oder des optischen Systems 20 relativ zu dem Schaltungsträger 30 derart durchgeführt, dass die in den Bohrungen 33 und 35 angeordneten Anschlagelemente 140 und 142 an dem jeweiligen Anschlagbereich 28 und 26 anliegen.

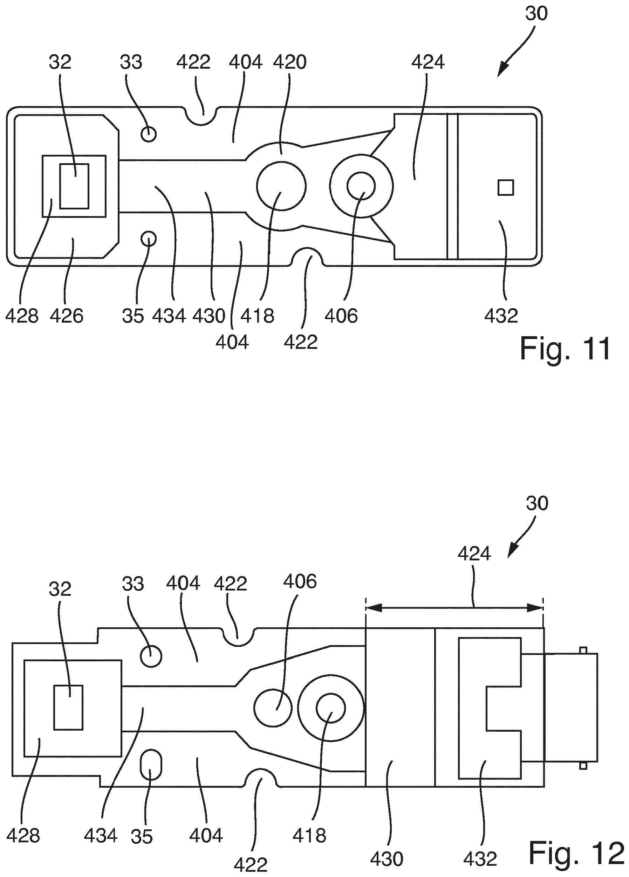

In einem Funktionsblock 12 wird der Schaltungsträger 30 in der bestimmten Lage relativ zu dem optischen System 20 festgelegt. So kann der Schaltungsträger 30 an dem optischen System 20 befestigt werden, bspw. mittels einer Schraube (nicht dargestellt). Die entsprechenden Bohrlöcher für die Schraube sind in den Figuren 11 und 12 mit dem Bezugszeichen 406 bezeichnet. Ferner ist zur Befestigung ein Schweißen, Kleben oder Klammern denkbar. Damit erhält man eine Beleuchtungseinrichtung mit einem optischen System 20, bei dem die lichtemittierende Fläche 34 der mindestens einen Halbleiterlichtquelle 32 mit besonders hoher Genauigkeit relativ zu den lichttechnisch wirksamen Bereichen des optischen Systems 20 positioniert ist.

Ein besonderer Vorteil des vorliegend beschriebenen Verfahrens besteht darin, dass ein Anordnungsschritt des optischen Systems 20 und des Schaltungsträgers 30 durch die zuvor geschehene Anordnung der Anschlagelement 140, 142 und der Halbleiterlichtquelle 32 zueinander vereinfacht wird. Die gewünschte hohe Genauigkeit zwischen lichtemittierendem Bereich 34 der Halbleiterlichtquelle 32 und dem restlichen optischen System wird - unabhängig von dem Anordnungsschritt des optischen Systems 20 und des Schaltungsträgers 30 - bereits durch die Vorgabe und Anordnung gemäß einer Soll-Lage des lichtemittierenden Bereichs 34 der Halbleiterlichtquelle 32 in Bezug auf die zumindest zwei Bohrungen 33, 35 in dem Schaltungsträger 30 realisiert. Somit kann mit geringem Aufwand und geringeren Kosten eine verbesserte Positionierungsgenauigkeit der Halbleiterlichtquellen 32 relativ zu dem optischen System 20 realisiert werden.

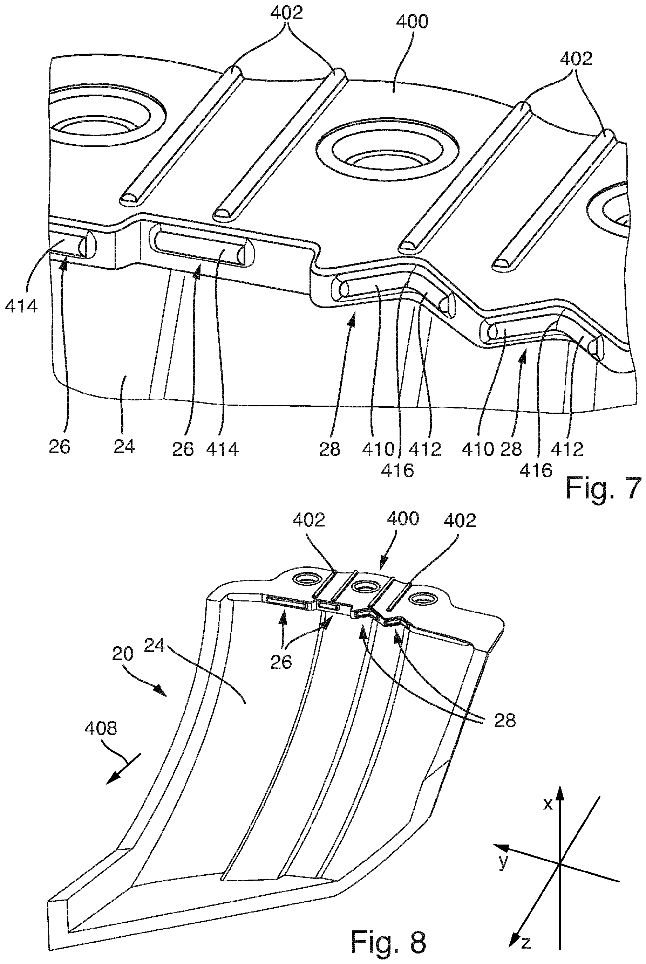

Die erzielbare Genauigkeit lässt sich noch dadurch steigern, dass der Schaltungsträger 30 auf eine Anschlagfläche 400 mit mindestens zwei davon abstehenden Anschlagrippen 402 aufgelegt wird (vgl. Figuren 7 und 8), so dass definierte Auflagebereiche 404 des Schaltungsträgers 30 auf den Anschlagrippen 402 liegen. Die definierten Auflagebereiche 404 des Schaltungsträgers 30, die auf den Anschlagrippen 402 zur Auflage gelangen, sind vorzugsweise frei von Lötstopplack ausgebildet.

Die Anschlagbereiche 26, 28 werden auf einer in einer Lichtaustrittsrichtung 408 der Beleuchtungseinrichtung gerichteten Stirnfläche der Anschlagfläche 400 ausgebildet. Die Anschlagbereiche 26, 28 weisen vorzugsweise zwei entgegen der Lichtaustrittsrichtung 408 der Beleuchtungseinrichtung zusammenlaufende Prismaflächen 410, 412 und eine dazu beabstandete parallel zu einer Erstreckungsebene der in der Lichtaustrittsrichtung 408 gerichteten Stirnfläche der Anschlagfläche 400 seitlich versetzt zu den Prismaflächen 410, 412 angeordnete ebene Fläche 414 auf. Vorzugsweise wird in einer Kerbe 416, in der die beiden Prismaflächen 410, 412 zusammentreffen, ein Freischnitt ausgebildet.

Die Anschlagrippen 402 sind jeweils bevorzugt als ein Zylinderabschnitt in Form eines entlang seiner Längsachse beschnittenen Zylinders ausgebildet. Ein auf den Wirkabschnitt 24 in flüssiger Form aufgetragener Lack fließt von den Anschlagrippen 402 dann besonders gut ab, so dass die nach dem Aushärten verbleibende Lackschicht besonders dünn ist und das anschließende Positionieren des Schaltungsträgers 30 mit der Halbleiterlichtquelle 32 relativ zu dem optischen System 20 besonders wenig beeinträchtigt, wenn die Anschlagrippen 402 in besonderer Weise ausgebildet sind. In diesem Sinn wird vorgeschlagen, dass die Anschlagrippen 402 derart ausgebildet sind, dass deren Radius (quer zu einer Längsachse des Zylinderabschnitts) mindestens das 10-fache der auf dem Wirkabschnitt 24 des optischen Systems 20 maximal zu erwartenden Lackdicke ist. Ebenso wird vorgeschlagen, dass die Anschlagrippen 402 derart ausgebildet sind, dass deren Radius höchstens das 75-fache der auf einem Wirkabschnitt 24 des optischen Systems 20 maximal zu erwartenden Lackdicke ist. Typische Lackdicken beim Flutlackieren ohne ungünstige Lackanhäufungen liegen im Bereich von 10pm - 25pm. Somit liegt der Radius der zylinderabschnittsförmigen Anschlagrippen im Bereich von etwa 0,1mm - 1,875mm.

Die Anschlagfläche 400 mit den mindestens zwei davon abstehenden Anschlagrippen 402 ist vorzugsweise einteilig mit dem optischen System 20 ausgebildet. Der Wirkabschnitt 24 des optischen Systems 20 wird vorzugsweise durch ein Werkzeugteil umfassendes Werkzeug hergestellt, durch das auch die Anschlagbereiche 26, 28 und die Anschlagfläche 400 mit den Anschlagrippen 402 hergestellt werden.

Figur 2 zeigt eine Vorrichtung 150 zur Durchführung des Verfahrens gemäß Figur 1. Die Halbleiterlichtquelle 32 ist auf dem Schaltungsträger 30 vorangeordnet und mit dem Schaltungsträger 30 verbunden. Der Schaltungsträger 30 wird mittels einer Haltevorrichtung 151 an einer definierten Position gehalten. Die Kamera 52 erfasst die Ist-Position 102 des lichtemittierenden Bereichs 34 und gibt diese Ist-Position 102 an ein Rechengerät 152 weiter. Das Rechengerät 152 umfasst ein Speicherelement 154, auf dem die Soll-Lage des lichtemittierenden Bereichs 34 der Halbleiterlichtquelle 32 in Bezug auf die zumindest zwei Bohrungen 33 und 35 abgespeichert ist. Diese Soll-Lage kann beispielsweise anhand von praktischen Versuchen an Prototypen des optischen Systems 20 oder aber rechnerisch durch Simulationstools oder mittels eines geeigneten Kalibrierungswerkzeugs ermittelt werden. Das Rechengerät 152 umfasst des Weiteren eine Recheneinheit 156, beispielsweise einen Mikroprozessor, auf der ein geeignetes Computerprogramm abläuft, welches die Verfahrensschritte gemäß der Figur 1 ausführen kann.

Die Kamerabilder der Kamera 52 werden mittels des Rechengeräts 152 ausgewertet und in Abhängigkeit von der Ist-Position 102 werden die Soll-Positionen 104 und 106 berechnet. Das Rechengerät 152 steuert die Bohrvorrichtung 158 derart, dass die Bohrungen 33 und 35 an den Soll-Positionen 104 und 106 des Schaltungsträgers 30 gebohrt werden.

Die Soll-Position 104 und 106 werden ebenso dazu verwendet, die Anschlagelemente 140 und 142 in die ausgeführten Bohrungen 33 und 35 mittels einer Einschießvorrichtung 160 einzuschießen bzw. einzubringen.

In einem nachfolgenden Schritt gemäß dem Funktionsblock 10 wird mittels eines Manipulator 162 oder per Hand das optische System 20 und der Schaltungsträger 30 derart relativ zueinander bewegt, dass die Anschlagelement 140 und 142 an den Anschlagbereichen 26 und 28 des optischen Systems 20 anliegen und damit mittels der Vorrichtung 150 oder einer Hilfsvorrichtung vorfixiert sind. Anschließend können das optische System 20 und der Schaltungsträger 30 dauerhaft zueinander festgelegt werden.

Figur 4 zeigt eine Vorrichtung 170 zur Durchführung des Verfahrens gemäß Figur 1. Im Unterschied zu Figur 2 sind die Bohrungen 33 und 35 bereits vorgebohrt in dem Schaltungsträger 30 ausgeführt. Mittels der Kamera 52 ermittelt das Rechengerät 152 die Ist-Positionen 108 und 110 der Bohrungen 33 und 35. In Abhängigkeit von der vorab ermittelten Soll-Lage, welche auf dem Speicherelement 154 abgespeichert ist, wird eine Soll-Position 112 des lichtemittierenden Bereichs 34 ermittelt. Mittels eines Manipulators 164 wird die Halbleiterlichtquelle 32 entsprechend der Soll-Position 112 auf dem Schaltungsträger 30 positioniert und mit diesem verbunden. Anschließend werden mittels der Einschießvorrichtung 160 die Anschlagelement 140 und 142 in die Bohrungen 30 und 35 eingebracht und die Relativbewegung des optischen Systems 20 und des Schaltungsträgers 30 zueinander durchgeführt.

Die in den Figuren 2 und 4 mit den Bezugszeichen 160, 52 152, 158, 162 und 164 bezeichneten Elemente der Vorrichtungen 150 und 160 können allgemein auch als Mittel zur Ausführung der entsprechenden Schritte bzw. Handlungen bezeichnet werden.

Figur 6 zeigt eine schematische perspektivische Ansicht eines optischen Systems 20 mit einem optischen Wirkabschnitt 24, welcher vorliegend beispielhaft als Reflektorfläche ausgebildet ist. Selbstverständlich kann der optische Wirkabschnitt 24 auch als ein Transmissionselement ausgebildet sein, welches von der Halbleiterlichtquelle 32 ausgesendetes Licht transmittiert. Mithin lassen sich die nachfolgend beschriebenen Merkmale, die nicht explizit auf einen Reflektor gerichtet sind, auch auf ein entsprechendes Transmissionselement übertragen.

Der optische Wirkabschnitt 24 ist integraler Bestandteil des optischen Systems 20. Die Anschlagbereiche 26 und 28 sind in x-Richtung orientiert und an dem optischen System 20 einstückig an einer in Lichtaustrittsrichtung 408 des optischen Systems 20 angeordneten Schmal- oder Stirnseite einer Grundplatte des optischen Systems 20 angeordnet. Auf der Oberseite der Grundplatte ist die Anschlagfläche 400 mit den Anschlagrippen 402 angeordnet. Ein von der Halbleiterlichtquelle 32 abgestrahltes Lichtbündel Lichtstrahl 200 wird von dem Wirkabschnitt 24 als reflektierter Lichtstrahl 202 reflektiert.

Auf der dem optischen Wirkabschnitt 24 abgewandten Seite weist das optische System 20 Anschlag- und/oder Befestigungsabschnitte auf. Beispielsweise kann das optische System 20 die dem Schaltungsträger 30 zugewandte Anschlagfläche 400 mit den davon abstehenden Anschlagrippen 402 umfassen. Die Anschlagfläche 400 kann zur Verklebung mit der Unterseite, insbesondere im Bereich der definierten Auflagebereiche 404, des Schaltungsträgers 30 dienen. Durch die Anschlagrippen 402, welche die Unterseite des Schaltungsträgers 30 und die Anschlagfläche 400 in einem definierten Abstand zueinander halten, kann ein Verkleben schwierig sein. Aus diesem Grund ist auf der Anschlagfläche 400 mindestens ein Klebepodest (nicht dargestellt) ausgebildet, das unterhalb einer Klebebohrung oder in einem Randbereich des Schaltungsträgers 30 angeordnet sein kann. Das Klebepodest weist eine bezüglich der Anschlagfläche 400 erhabene Klebefläche auf, die näher an der Unterseite des Schaltungsträgers 30 angeordnet ist als die Anschlagfläche 400. Dadurch wird der Abstand zwischen der Unterseite des Schaltungsträgers 30 und der oder den Klebefläche(n) auf ein Maß reduziert, das ein sicheres und zuverlässiges Verkleben ermöglicht. Der Abstand zwischen der Unterseite des Schaltungsträgers 30 und der oder den Klebefläche(n) beträgt vorzugsweise weniger als 0,1mm. Die Höhe der Klebefläche eines Klebepodests ist vorzugsweise kleiner als die Höhe der benachbarten Anschlagrippen 402, jeweils bezogen auf die Anschlagfläche 400. Der Abstand wird in Relation zu Auflagerippen bestimmt, auf denen der Schaltungsträger 30 aufliegt. Der Abstand wird zudem so gewählt, dass ein Kleberaustritt vermieden wird, ein Aushärten des Klebers ohne Probleme möglich ist und die Zykluszeit optimiert wird.

Der Schaltungsträger 30 kann mindestens eine Klebebohrung (nicht dargestellt) aufweisen, in die bei auf der Anschlagfläche 400 aufliegendem Schaltungsträger 30 Klebstoff zum Verkleben des Schaltungsträgers 30 mit der Anschlagfläche 400 eingebracht wird. Die Klebepodeste des optischen Systems 20 sind vorzugsweise im Bereich dieser Klebebohrungen des Schaltungsträgers 30 angeordnet. Alternativ oder zusätzlich können die Klebepodeste auch am Rand des Schaltungsträgers 30 angeordnet sein.

In die Bohrungen 33 und 35 sind die als Pins ausgebildeten Anschlagelemente 140 und 142 eingebracht. Die Anschlagelemente 140 und 142 liegen in der gezeigten Einbauposition des optischen Systems 20 an den Anschlagbereichen 26 und 28 an. Eine Halteeinrichtung 46, an welcher der Schaltungsträger 30 angeordnet ist, kann als Kühlkörper ausgebildet sein.

Durch das durch die Relativbewegung des optischen Systems 20 zu dem Schaltungsträger 30 erreichte Anliegen der Anschlagelemente 140 und 142 an den Anschlagbereichen 26 und 28 wird eine Bewegung des Schaltungsträgers 30 und des optischen Systems 20 relativ zueinander in zumindest einer Ebene, beispielsweise der yz-Ebene, begrenzt. Das heißt, der Schaltungsträger 30 mit der Halbleiterlichtquelle 32 wird in der yz-Ebene mit hoher Genauigkeit relativ zu dem optischen System 20 positioniert. Mit Hilfe der Anschlagrippen 402 ergibt sich zudem eine hochgenaue Positionierung in x-Richtung (vgl. die Koordinatensysteme in den Figuren 6 und 8).

Der Anschlagbereich 26 verläuft im Wesentlichen parallel zur y-Achse und begrenzt gemeinsam mit dem Anschlagelement 142 die Bewegung des optischen Systems 20 in negativer z-Richtung bei feststehendem Schaltungsträger 30.

Der Anschlagbereich 28 ist hingegen prisma- oder V-förmig ausgebildet und begrenzt gemeinsam mit dem Anschlagelement 140 die Bewegung des optischen Systems 20 gegenüber dem feststehenden Schaltungsträger 30 in der yz-Ebene. Somit begrenzen die Anschlagelemente 142 und 140 im Zusammenwirken mit den Anschlagbereichen 26 und 28 eine Bewegung des optischen Systems 20 und des Schaltungsträgers 30 in der yz-Ebene sowie eine Rotation um eine orthogonal zur yz-Ebene stehende Rotationsachse zueinander. Eine Bewegung des Schaltungsträgers 30 relativ zu dem optischen System 20 in x-Richtung sowie eine Rotation um orthogonal zu den xy- und xz-Ebenen stehende Rotationsachsen wird durch die Anschlagrippen 402 begrenzt. Durch eine hochgenau vorpositionierte Halbleiterlichtquelle 32 wird so zum einen eine hochgenaue Positionierung des lichtemittierenden Bereichs 34 zu dem optischen System 20 erreicht. Zum anderen wird der Schritt zur Anordnung des optischen Systems 20 und des Schaltungsträgers 30 zueinander vereinfacht, da nicht notwendigerweise optische Inspektionssysteme für den Anordnungsschritt eingesetzt werden müssen.

Des Weiteren sind die Anschlagbereiche 26 und 28 in ihrem jeweiligen Verlauf als vorspringende Rippen ausgebildet. Dies verbessert unter anderem die Positionsgenauigkeit. Selbstverständlich können die Anschlagbereiche 26 und 28 auch anders ausgeführt sein. Wesentlich ist jedoch eine sich gegenüber der Grundplatte hin zu den jeweiligen Anschlagelementen 140 und 142 ausgebildete Verjüngung der Anschlagbereiche 26 und 28, um die wirksame Kontaktfläche zu reduzieren und die Positioniergenauigkeit zu erhöhen. Ganz besonders bevorzugt ist es, wenn die vorspringenden Rippen (vgl. Figur 7) als Zylinderabschnitte in Form eines entlang seiner Längsachse beschnittenen Zylinders ausgebildet sind. Ein auf den Wirkabschnitt 24 in flüssiger Form aufgetragener Lack fließt von diesen Rippen der Anschlagbereiche 26, 28 dann besonders gut ab, so dass die nach dem Aushärten verbleibende Lackschicht besonders dünn ist und das anschließende Positionieren des Schaltungsträgers 30 mit der Halbleiterlichtquelle 32 relativ zu dem optischen System 20 besonders wenig beeinträchtigt, wenn die Rippen in besonderer Weise ausgebildet sind. In diesem Sinn wird vorgeschlagen, dass die Rippen der Anschlagbereiche 26, 28 derart ausgebildet sind, dass deren Radius (quer zu einer Längsachse des Zylinderabschnitts) mindestens das 10-fache der auf dem Wirkabschnitt 24 des optischen Systems 20 maximal zu erwartenden Lackdicke ist. Ebenso wird vorgeschlagen, dass die Rippen derart ausgebildet sind, dass deren Radius höchstens das 75-fache der auf einem Wirkabschnitt 24 des optischen Systems 20 maximal zu erwartenden Lackdicke ist. Typische Lackdicken beim Flutlackieren ohne ungünstige Lackanhäufungen liegen im Bereich von 10µm - 25µm. Somit liegt der Radius der zylinderabschnittsförmigen Rippen der Anschlagbereiche 26, 28 im Bereich von etwa 0,1mm - 1,875mm.

Das Werkzeug zur Herstellung des optischen Systems 20 ist derart ausgebildet, dass sich weder an den Anschlagbereichen 26 und 28 noch an der Anschlagfläche 400 bzw. den Anschlagrippen 402 eine Werkzeug- oder Schiebertrennung befindet, was durch eine entsprechende Gratlosigkeit des optischen Systems 20 in diesem Bereich die Positioniergenauigkeit weiter erhöht.

Die Bohrungen 33 und 35, in welche die Anschlagelement 140 und 142 eingeführt sind, sind quer zur yz-Ebene, also im Wesentlichen lotrecht zur Abstrahlrichtung 408, die im Wesentlichen parallel zur z-Achse verläuft, zu den Rändern des Schaltungsträgers 30 und/oder zu den Rändern des optischen Systems 20 hin orientiert angeordnet. Vorteilhaft ist der Abstand der Soll-Positionen 104 und 106 oder der Abstand der Ist-Positionen 108 und 110 dadurch möglichst groß gewählt, was Toleranzen und Fehler klein hält und somit die Positioniergenauigkeit weiter verbessert.

In den Figuren 11 bis 12 sind weitere Bauteile bzw. Elemente der Schaltungsträger 30 dargestellt. Insbesondere bezeichnet das Bezugszeichen 418 ein Loch, bspw. in Form einer Bohrung, zur Befestigung des Schaltungsträgers 30 an einem Kühlkörper 46. Mit 420 ist ein Bereich des Schaltungsträgers 30 bezeichnet, der zur Verbindung mit einem Massepotential über Leiterbahnen auf der Rückseite des Schaltungsträgers 30 dient. Mit dem Bezugszeichen 422 sind Codierungskerben im Rand des Schaltungsträgers 30 bezeichnet, um den verwendeten Typ von Schaltungsträger 30 bzw. der darauf angeordneten Halbleiterlichtquellen 32 eindeutig zu kennzeichnen. Für verschiedene Typen von Schaltungsträger 30 bzw. Halbleiterlichtquellen 32 sind die Codierungskerben unterschiedlich ausgebildet bzw. angeordnet. Mit 424 ist ein Bereich des Schaltungsträgers 30 bezeichnet, auf dem elektronische oder elektrische Komponenten oder Bauelemente angeordnet werden können. Ein Bereich, in dem ein NTC (Negative Temperature Coefficient)-Widerstand möglichst dicht an der LED 32 angeordnet werden kann, ist mit 426 bezeichnet. Ein Bereich mit einem AlNi-Einsatz ist mit dem Bezugszeichen 428 bezeichnet. In diesem Bereich ist keine Krafteinwirkung von außen erlaubt. In einem Bereich 430, der außerhalb der definierten Auflagebereiche 404 des Schaltungsträgers 30 liegen sollte, kann ein Schild oder Etikett mit der Bezeichnung des Schaltungsträgers 30 bzw. der Halbleiterlichtquellen 32 aufgebracht werden. Die Bezeichnung kann auch mittels eines Lasers direkt auf die Leiterplatte 30 aufgebracht werden. Ein oder mehrere Steckerelement(e), z.B. in Form von JST-Steckern, zum Kontaktieren des Schaltungsträgers 30 und der darauf angeordneten Komponenten einschließlich der LEDs 32 können in einem Bereich 432 angeordnet werden. Schließlich sind in einem Bereich 434 Leiterbahnen zur Verbindung der Stecker im Bereich 432 mit den LEDs 32 vorgesehen.

## Patentansprüche

1. Verfahren zur Anordnung eines Schaltungsträgers (30) umfassend mindestens eine Halbleiterlichtquelle (32) in einer bestimmten Lage relativ zu einem optischen System (20) einer Beleuchtungseinrichtung eines Kraftfahrzeugs, wobei
- eine Soll-Lage eines lichtemittierenden Bereichs (34) der mindestens einen Halbleiterlichtquelle (32) in Bezug auf zumindest zwei Bohrungen (33, 35) in dem Schaltungsträger (30) vorgegeben wird,
- die mindestens eine Halbleiterlichtquelle (32) und die Bohrungen (33, 35) in Abhängigkeit von der Soll-Lage relativ zueinander festgelegt werden, **dadurch gekennzeichnet, dass**
- in die Bohrungen (33, 35) jeweils ein Anschlagelement (140, 142) eingeführt und darin festgelegt wird, wobei jedes der Anschlagelemente (140, 142) einem Anschlagbereich (26; 28) des optischen Systems (20) zugeordnet ist,
- der Schaltungsträger (30) auf eine Anschlagfläche (400) des optischen Systems (20) mit mindestens zwei davon abstehenden Anschlagrippen (402) aufgelegt wird, so dass definierte Auflagebereiche (404) des Schaltungsträgers (30) auf den Anschlagrippen (402) liegen, und
- eine Relativbewegung des Schaltungsträgers (30) und des optischen Systems (20) relativ zueinander derart ausgeführt wird, dass die Anschlagelemente (140, 142) an dem jeweiligen Anschlagbereich (26, 28) anliegen, das optische System (20) einen optischen Wirkabschnitt (24) als integralen Bestandteil aufweist, die Anschlagbereiche (26) und (28) an dem optischen System (20) einstückig an einer in Lichtaustrittsrichtung (408) des optischen Systems (20) angeordneten Schmal- oder Stirnseite einer Grundplatte des optischen Systems (20) angeordnet sind, die Anschlagfläche (400) des optischen Systems mit den Anschlagrippen (402) auf einer Oberseite der Grundplatte des optischen Systems angeordnet ist, die Anschlagfläche (400) zur Verklebung mit einer Unterseite des Schaltungsträgers (30) dient und dass auf der Anschlagfläche (400) mindestens ein Klebepodest ausgebildet ist, das unterhalb einer Klebebohrung oder in einem Randbereich des Schaltungsträgers (30) angeordnet ist und das eine bezüglich der Anschlagfläche (400) erhabene Klebefläche aufweist, die näher an der Unterseite des Schaltungsträgers (30) angeordnet ist als die Anschlagfläche (400).

2. Verfahren nach Anspruch 1, **dadurch gekennzeichnet, dass** die Anschlagelemente (140, 142) und die Anschlagbereiche (26, 28) derart ausgebildet und auf dem Schaltungsträger (30) angeordnet sind, dass sie in ihrer Funktion nicht durch auf dem Schaltungsträger (30) angeordnete Leiterbahnen und Bauteile beeinträchtigt sind, und umgekehrt die auf dem Schaltungsträger (30) angeordneten Leiterbahnen und Bauteile in ihrer Funktion nicht durch die Anschlagelemente (140, 142) und die Anschlagbereiche (26, 28) beeinträchtigt sind.

3. Verfahren nach Anspruch 1 oder 2, **dadurch gekennzeichnet, dass** das optische System (20) einen optisch mit der mindestens einen Halbleiterlichtquelle (32) zusammenwirkenden optischen Wirkabschnitt (24) umfasst, welcher integraler Bestandteil des optischen Systems (20) ist, und wobei der Wirkabschnitt (24) durch ein Werkzeugteil umfassendes Werkzeug hergestellt wird, durch das auch die Anschlagbereiche (26, 28) und die Anschlagfläche (400) mit den Anschlagrippen (402) hergestellt werden.

4. Verfahren nach dem Anspruch 3, wobei der optische Wirkabschnitt (24) eine Reflektorfläche ist.

5. Verfahren nach einem der vorhergehenden Ansprüche, **dadurch gekennzeichnet, dass** die Soll-Lage des lichtemittierenden Bereichs (34) der mindestens einen Halbleiterlichtquelle (32) in Bezug auf die Bohrungen (33, 35) in Abhängigkeit von einer weiteren Soll-Lage des mindestens einen lichtemittierenden Bereichs (34) in Bezug auf die Anschlagbereiche (26, 28) des optischen Systems (20) vorgegeben wird.

6. Verfahren nach einem der vorhergehenden Ansprüche, **dadurch gekennzeichnet, dass** die Anschlagbereiche (26, 28) auf einer in einer Lichtaustrittsrichtung (408) der Beleuchtungseinrichtung gerichteten Stirnfläche der Anschlagfläche (400) ausgebildet werden.

7. Verfahren nach einem der vorhergehenden Ansprüche, **dadurch gekennzeichnet, dass** die Anschlagbereiche (26, 28) zwei entgegen einer Lichtaustrittsrichtung (408) der Beleuchtungseinrichtung zusammenlaufende Prismaflächen (410, 412) und eine dazu beabstandete parallel zu einer Erstreckungsebene einer in der Lichtaustrittsrichtung (408) gerichteten Stirnfläche der Anschlagfläche (400) versetzt zu den Prismaflächen (410, 412) angeordnete ebene Fläche (414) aufweisen.

8. Verfahren nach Anspruch 7, **dadurch gekennzeichnet, dass** in einer Kerbe (416), in der die beiden Prismaflächen (410, 412) zusammentreffen, ein Freischnitt ausgebildet wird.

9. Verfahren nach einem der vorhergehenden Ansprüche, **dadurch gekennzeichnet, dass** die Anschlagfläche (400) mit den mindestens zwei davon abstehenden Anschlagrippen (402) einteilig mit dem optischen System (20) hergestellt wird.

10. Verfahren nach Anspruch 9, **dadurch gekennzeichnet, dass** die Anschlagrippen (402) jeweils als ein Zylinderabschnitt in Form eines entlang seiner Längsachse beschnittenen Zylinders hergestellt werden.

11. Verfahren nach Anspruch 10, **dadurch gekennzeichnet, dass** die Anschlagrippen (402) derart hergestellt werden, dass deren Radius mindestens das 10-fache einer auf einem Wirkabschnitt (24) des optischen Systems (20) maximal zu erwartenden Lackdicke ist.

12. Verfahren nach Anspruch 10 oder 11, **dadurch gekennzeichnet, dass** die Anschlagrippen (402) derart hergestellt werden, dass deren Radius höchstens das 75-fache der auf einem Wirkabschnitt (24) des optischen Systems (20) maximal zu erwartenden Lackdicke ist.

13. Verfahren nach einem der vorhergehenden Ansprüche, **dadurch gekennzeichnet, dass** die definierten Auflagebereiche (404) des Schaltungsträgers (30), die auf den Anschlagrippen (402) zur Auflage gelangen, frei von Lötstopplack ausgebildet werden.

14. Verfahren nach einem der vorhergehenden Ansprüche, **dadurch gekennzeichnet, dass** die Anschlagelemente (140, 142) als Stifte mit einem Kopf (300) und einem Schaft (302) ausgeführt werden, wobei auf einer Unterseite des Kopfes (300) um den Schaft (302) herum eine Auflagefläche (304) der Stifte (140, 142) ausgebildet ist, bis zu der die Stifte (140, 142) mit ihrem Schaft (302) in die Bohrungen (33, 35) eingeführt werden, und wobei der Schaft (302) entlang seiner Längserstreckung (306) zwei Abschnitte (308, 310) mit unterschiedlichen Durchmessern aufweist, einem in der Nähe des Kopfes (300) angeordneten proximalen Abschnitt (308) mit einem Einpressdurchmesser und einem von dem Kopf (300) abgewandten distalen Abschnitt (310) mit einem Zentrierdurchmesser, wobei der Einpressdurchmesser größer als der Zentrierdurchmesser ausgebildet wird.

15. Verfahren nach Anspruch 14, **dadurch gekennzeichnet, dass** die Stifte (140, 142) jeweils in einem Bereich (316), wo der proximale Abschnitt (308) die Anschlagfläche (304) berührt, einen ringförmigen Freischnitt aufweisen.

16. Verfahren nach Anspruch 14 oder 15, **dadurch gekennzeichnet, dass** eine Längserstreckung (306) des proximalen Abschnitts (308) kleiner gleich einer Dicke des Schaltungsträgers (30) ausgebildet wird.

17. Beleuchtungseinrichtung für ein Kraftfahrzeug, welche nach einem Verfahren gemäß einem der Ansprüche 1 bis 16 hergestellt ist.

## Claims

1. Method for arranging a circuit carrier (30) comprising at least one semiconductor light source (32) in a specific position relative to an optical system (20) of an illumination device of a motor vehicle, wherein
- a target position of a light-emitting region (34) of the at least one semiconductor light source (32) is specified in relation to at least two bores (33, 35) in the circuit carrier (30), and
- the at least one semiconductor light source (32) and the bores (33, 35) are fixed relative to one another depending on the target position, **characterized in that**
- a stop element (140, 142) is inserted into each of the bores (33, 35) and fixed therein, each of the stop elements (140, 142) being assigned to a stop region (26; 28) of the optical system (20),
- the circuit carrier (30) is placed on a stop surface (400) of the optical system (20) that has at least two stop ribs (402) protruding therefrom, such that defined contact regions (404) of the circuit carrier (30) rest on the stop ribs (402), and
- a relative movement of the circuit carrier (30) and the optical system (20) relative to one another is carried out in such a way that the stop elements (140, 142) abut the relevant stop region (26, 28), the optical system (20) has an optical active portion (24) as an integral component, the stop regions (26) and (28) on the optical system (20) are arranged in one piece on a narrow or end face of a base plate of the optical system (20), which face is arranged in a light exit direction (408) of the optical system (20), the stop surface (400) of the optical system that has the stop ribs (402) is arranged on an upper face of the base plate of the optical system, the stop surface (400) is used for adhesive bonding to a lower face of the circuit carrier (30), and **in that** at least one adhesive platform is formed on the stop surface (400), which platform is arranged below an adhesive hole or in an edge region of the circuit carrier (30) and which has an adhesive surface which is raised with respect to the stop surface (400) and is arranged closer to the lower face of the circuit carrier (30) than the stop surface (400).

2. Method according to claim 1, **characterized in that** the stop elements (140, 142) and the stop regions (26, 28) are designed and arranged on the circuit carrier (30) such that their function is not impaired by conductor tracks and components arranged on the circuit carrier (30), and, conversely, the function of the conductor tracks and components arranged on the circuit carrier (30) is not impaired by the stop elements (140, 142) and the stop regions (26, 28).

3. Method according to claim 1 or claim 2, **characterized in that** the optical system (20) comprises an optical active portion (24) which optically interacts with the at least one semiconductor light source (32) and which is an integral part of the optical system (20), the active portion (24) being produced by a tool comprising a tool part, by means of which tool the stop regions (26, 28) and the stop surface (400) having the stop ribs (402) are also produced.

4. Method according to claim 3, wherein the optical active portion (24) is a reflector surface.

5. Method according to any of the preceding claims, **characterized in that** the target position of the light-emitting region (34) of the at least one semiconductor light source (32) is specified in relation to the bores (33, 35) depending on a further target position of the at least one light-emitting region (34) in relation to the stop regions (26, 28) of the optical system (20).

6. Method according to any of the preceding claims, **characterized in that** the stop regions (26, 28) are formed on an end face of the stop surface (400) that is directed in a light exit direction (408) of the illumination device.

7. Method according to any of the preceding claims, **characterized in that** the stop regions (26, 28) have two prism surfaces (410, 412) which converge counter to a light exit direction (408) of the illumination device and a planar surface (414) which is spaced apart therefrom and is arranged in parallel with an extension plane of an end face of the stop surface (400) that is directed in the light exit direction (408), and so as to be offset with respect to the prism surfaces (410, 412).

8. Method according to claim 7, **characterized in that** a cutout is formed in a notch (416) in which the two prism surfaces (410, 412) meet.

9. Method according to any of the preceding claims, **characterized in that** the stop surface (400) having the at least two stop ribs (402) protruding therefrom is produced in one piece with the optical system (20).

10. Method according to claim 9, **characterized in that** the stop ribs (402) are each produced as a cylinder portion in the form of a cylinder cut along the longitudinal axis thereof.

11. Method according to claim 10, **characterized in that** the stop ribs (402) are produced such that the radius thereof is at least 10 times a maximum paint thickness to be expected on an active portion (24) of the optical system (20) .

12. Method according to claim 10 or claim 11, **characterized in that** the stop ribs (402) are produced such that their radius is at most 75 times the maximum paint thickness to be expected on an active portion (24) of the optical system (20).

13. Method according to any of the preceding claims, **characterized in that** the defined contact regions (404) of the circuit carrier (30) which come to rest on the stop ribs (402) are formed free of solder resist.

14. Method according to any of the preceding claims, **characterized in that** the stop elements (140, 142) are designed as pins having a head (300) and a shaft (302), a contact surface (304) of the pins (140, 142) being formed around the shaft (302) on a lower face of the head (300), up to which contact surface the pins (140, 142) are inserted into the bores (33, 35) with the shaft (302) thereof, and the shaft (302) having two portions (308, 310) along the longitudinal extension (306) thereof that have different diameters: a proximal portion (308) which is arranged in the vicinity of the head (300) and has a press-in diameter, and a distal portion (310) which faces away from the head (300) and has a centering diameter, the press-in diameter being larger than the centering diameter.

15. Method according to claim 14, **characterized in that** the pins (140, 142) each have an annular cutout in a region (316) where the proximal portion (308) touches the stop surface (304).

16. Method according to claim 14 or claim 15, **characterized in that** a longitudinal extension (306) of the proximal portion (308) is less than or equal to a thickness of the circuit carrier (30).

17. Illumination device for a motor vehicle that is produced by a method according to any of claims 1 to 16.

## Revendications

1. Procédé d'agencement d'un support de circuit (30) comprenant au moins une source lumineuse à semiconducteur (32) dans une position déterminée par rapport à un système optique (20) d'un système d'éclairage d'un véhicule automobile,
- une position de consigne d'une zone émettrice de lumière (34) de ladite au moins une source lumineuse à semi-conducteur (32) étant prédéterminée par rapport à au moins deux perçages (33, 35) dans le support de circuit (30),
- ladite au moins une source lumineuse à semiconducteur (32) et les perçages (33, 35) étant déterminés relativement l'une par rapport à l'autre en fonction de la position de consigne, **caractérisé en ce que**
- dans les perçages (33, 35), un élément butoir (140, 142) est introduit et y est fixé, chacun des éléments butoirs (140, 142) étant attribué à une zone butoir (26 ; 28) du système optique (20),
- le support de circuit (30) est posé sur une surface butoir (400) du système optique (20) avec au moins deux des nervures butoirs (402) en saillie, si bien que des zones d'appui définies (404) du support de circuit (30) reposent sur les nervures butoirs (402), et
- un mouvement relatif du support de circuit (30) et du système optique (30) l'un par rapport à l'autre est effectué de façon telle que les éléments butoirs (140, 142) soient en appui sur la zone butoir (26, 28) respective, le système optique (20) comprenant une zone effective optique (24) comme partie intégrante, les zones butoirs (26) et (28) étant disposées sur le système optique (20) en une seule pièce sur un côté étroit ou frontal disposé dans le sens de la sortie de lumière (408) du système optique (20), d'une plaque de base du système optique (20), la surface butoir (400) du système optique étant disposée par les nervures butoirs (402) sur une face supérieure de la plaque de base du système optique, la surface butoir (400) servant au collage sur une face inférieure du support de circuit (30) et au moins un socle de collage étant formé sur la surface butoir (400), qui est disposé en dessous d'un perçage de collage ou dans une zone périphérique du support de circuit (30) et qui comprend une surface de collage surélevée par rapport à la surface butoir (400), qui est disposée plus proche de la face inférieure du support de circuit (30) que la surface butoir (400).

2. Procédé selon la revendication 1, **caractérisé en ce que** les éléments butoirs (140, 142) et les zones butoirs (26, 28) sont conformés et disposés sur le support de circuit (30) de façon telle qu'ils ne soient pas gênés dans leur fonction par des lignes conductrices et composants disposés sur le support de circuit (30) et que, inversement, les lignes conductrices et composants disposés sur le support de circuit (30) ne soient pas gênés dans leur fonction par les éléments butoirs (140, 142) et les zones butoirs (26, 28).

3. Procédé selon la revendication 1 ou 2, **caractérisé en ce que** le système optique (20) comprend une zone d'effet optique (24) coopérant avec ladite au moins une source lumineuse à semiconducteur (32) et étant partie intégrante du système optique (20), la zone d'effet optique (24) étant réalisée au moyen d'un outil comportant une partie d'outil par laquelle les zones butoirs (26, 28) et la surface butoir (400) avec les nervures butoirs (402) sont également réalisés.

4. Procédé selon la revendication 3, la zone d'effet optique (24) étant une surface réfléchissante.

5. Procédé selon l'une des revendications précédentes, **caractérisé en ce que** la position de consigne de la zone émettrice de lumière (34) de ladite au moins une source lumineuse à semiconducteur (32) est déterminée par rapport aux perçages (33, 35) en fonction d'une autre position de consigne de ladite au moins une zone émettrice de lumière (34) par rapport aux zones butoirs (26, 28) du système optique (20).

6. Procédé selon l'une des revendications précédentes, **caractérisé en ce que** les zones butoirs (26, 28) sont formées sur une face frontale de la surface butoir (400) orientée dans une direction de sortie de lumière (408) du dispositif d'éclairage.

7. Procédé selon l'une des revendications précédentes, **caractérisé en ce que** les zones butoirs (26, 28) comprennent deux surfaces de prisme (410, 412) convergeant à l'encontre d'une direction de sortie de lumière (408) du dispositif d'éclairage et une surface plane (414) espacée de celles-ci, disposée parallèlement à un plan d'étendu d'une face frontale de la surface butoir (400), orientée dans une direction de sortie de lumière (408) et de façon décalée par rapport aux surfaces de prisme (410, 412).

8. Procédé selon la revendication 7, **caractérisé en ce qu'**une découpe est formée dans une encoche (416) dans laquelle les deux surfaces de prisme (410, 412) se rejoignent.

9. Procédé selon l'une des revendications précédentes, **caractérisé en ce que** la surface butoir (400) avec lesdits au moins deux nervures butoirs (402) en saillie est réalisée en une seule pièce avec le système optique (20) .

10. Procédé selon la revendication 9, **caractérisé en ce que** les nervures butoirs (402) sont réalisées comme une partie de cylindre sous la forme d'un cylindre découpé le long de son axe longitudinal.

11. Procédé selon la revendication 10, **caractérisé en ce que** les nervures butoirs (402) sont réalisées de façon telle que leur rayon soit au moins dix fois une épaisseur de vernis à attendre au maximum sur une zone effective (24) du système optique (20).

12. Procédé selon la revendication 10 ou 11, **caractérisé en ce que** les nervures butoirs (402) sont réalisées de façon telle que leur rayon soit au maximum 75 fois l'épaisseur de vernis à attendre au maximum sur une zone effective (24) du système optique (20).

13. Procédé selon l'une des revendications précédentes, **caractérisé en ce que** les zones d'appui définies (404) du support de circuit (30) qui viennent en appui sur les nervures butoirs (402), sont réalisées sans vernis de soudure.

14. Procédé selon l'une des revendications précédentes, **caractérisé en ce que** les éléments butoirs (140, 142) sont réalisés comme des clous avec une tête (300) et une tige (302), une surface d'appui (304) des clous (140, 142) étant réalisée sur une face inférieure de la tête (300) autour de la tige (302), jusqu'à laquelle les clous (140, 142) sont introduits par leur tige (302) dans les perçages (33, 35), et la tige (302) comprenant, le long de son étendue longitudinale (306), deux zones (308, 310) ayant des diamètres différents, une zone proximale (308) disposée proche de la tête (300), avec un diamètre de forçage, et une zone distale (310) éloignée de la tête (300), avec un diamètre de centrage, le diamètre de centrage étant réalisé plus grand que le diamètre de centrage.

15. Procédé selon la revendication 14, **caractérisé en ce que** les clous (140, 142) comprennent chacun, dans une zone (316) où la zone proximale (308) touche la surface d'appui (304), une découpe annulaire.

16. Procédé selon la revendication 14 ou 15, **caractérisé en ce qu'**une étendue longitudinale (306) de la zone proximale (308) est formée inférieure à, ou égale à, une épaisseur du support de circuit (30).

17. Dispositif d'éclairage pour un véhicule automobile, qui est fabriqué selon un procédé selon l'une des revendications 1 à 16.
